# FASCICULE DE BREVET EUROPEEN

(11) **EP 3 202 116 B1**
(45) Date de publication et mention de la délivrance du brevet: **08.12.2021**
(21) Numéro de dépôt: 15775430.0
(22) Date de dépôt: 02.10.2015
(51) Int. Cl.: G06F 3/14, G06F 9/451, H04L 29/08, G06Q 10/06, G06Q 10/10, G06F 16/28, G09G 5/14

(54) **PROCÉDÉ ET DISPOSITIF D'AIDE À LA DÉCISION**
VERFAHREN UND VORRICHTUNG ZUR UNTERSTÜTZUNG VON ENTSCHEIDUNGSFINDUNGEN
METHOD AND DEVICE TO ASSIST WITH DECISION-MAKING

(30) Priorité: 02.10.2014 FR 1459449; 05.12.2014 FR 1461995
(43) Date de publication de la demande: 09.08.2017
(73) Titulaire: Immersion, 33100 Bordeaux (FR)
(72) Inventeur: DE LA RIVIERE, Jean-Baptiste, F-33000 Bordeaux (FR); BIASIOLO, Nicolas, F-33320 Eysines (FR)
(74) Mandataire: Ipside
(86) Numéro de dépôt international: PCT/EP2015/072808
(87) Numéro de publication internationale: WO 2016/050960

(56) Documents cités:
- WO-A2-2007/113573
- WO-A2-2007/113573
- US-A1- 2006 106 755
- US-A1- 2006 106 755
- PRAKASH A ET AL: "DISTVIEW: SUPPORT FOR BUILDING EFFICIENT COLLABORATIVE APPLICATIONSUSING REPLICATED OBJECTS", CSCW. PROCEEDINGS OF THE CONFERENCE ON COMPUTER SUPPORTEDCOOPERATIVE WORK, XX, XX, 1 octobre 1994 (1994-10-01), pages 153-164, XP002943941,
- PRAKASH A ET AL: "DISTVIEW: SUPPORT FOR BUILDING EFFICIENT COLLABORATIVE APPLICATIONSUSING REPLICATED OBJECTS", CSCW. PROCEEDINGS OF THE CONFERENCE ON COMPUTER SUPPORTEDCOOPERATIVE WORK, XX, XX, 1 October 1994 (1994-10-01), pages 153-164, XP002943941,

## Description

La présente invention appartient au domaine du traitement de l'information.

Plus particulièrement, l'invention met en oeuvre un dispositif par lequel des opérateurs agissent sur des informations visualisées, et qui, par un traitement des interactions entre les informations et les opérateurs, définit des critères sur l'usage des différentes informations pour accompagner un processus de décision.

Dans le domaine de l'exploitation d'informations par un opérateur humain ou un groupe de personnes, il est généralement admis que les informations sont consultées et classées suivant des critères plus ou moins subjectifs d'un intérêt que chaque opérateur identifie dans une information par rapport à une problématique abordée.

Le plus souvent l'information est placée sur une échelle d'intérêt qui conduit les opérateurs à consulter les informations, les trier, leurs conférer une note de valeur, les annoter, les dupliquer, les classer ... et le plus souvent à réaliser des synthèses.

Les opérateurs disposent aujourd'hui de nombreux moyens informatiques qui leurs permettent de réaliser ces opérations avec une certaine performance, tant pour l'affichage des informations que pour le partage des informations entre plusieurs opérateurs, ainsi que pour la prise de note.

Toutefois, il est avec ces méthodes difficile aux opérateurs d'avoir rapidement une vue objective de l'ensemble des informations traitées, en particulier dès que le nombre d'informations devient important, en pratique supérieur à quelques dizaines.

Il est en outre fastidieux de visualiser simultanément des informations issues de différentes sources et qui peuvent se présenter sous des formes et sous des formats numériques différents.

Sur le plan des moyens matériels, des solutions comme le dispositif CLICKSHARE de la société BARCO répond partiellement à cette limitation. Dans ce dispositif, tous les terminaux informatiques nécessaires au partage de l'information passent par un ensemble de boîtiers additionnels avant d'être reliés à un dispositif d'affichage de grande taille, permettant ainsi à plusieurs opérateurs d'afficher leurs informations accessibles sous forme numériques côte à côte.

Toutefois un tel dispositif se limite à afficher des recopies d'écrans côte à côte et ne permet pas de manipulation avancée ou d'analyse objective de l'usage des contenus qui y sont affichés.

Le ou les opérateurs sont laissés à eux-mêmes pour s'assurer que l'intégralité des informations qu'ils ont jugées potentiellement nécessaires avant ou au cours de la réflexion est effectivement exploitée au bon moment et relativement à d'autres informations qui seraient complémentaires.

Pour assister les autres opérateurs dans la gestion et l'organisation des informations et conserver leurs contributions liées à une réflexion, un ou plusieurs opérateurs peuvent isoler, hiérarchiser, classer et organiser, sous forme de graphes, les différents éléments (idées, contenus, questions...) qu'ils voient en lien avec la réflexion menée.

Le document WO2008103436 par exemple décrit un système permettant de synchroniser les informations dans une carte conceptuelle avec celles présentes dans différents logiciels en relation.

Le document WO2013070930 décrit un procédé d'édition et de synchronisation de carte conceptuelle collaborative.

Ces méthodes et dispositifs présentent cependant l'inconvénient de produire des graphes subjectifs qui sont construits consciemment, au moins partiellement, par un ou plusieurs opérateurs, en parallèle de discussions éventuellement conduites avec d'autres opérateurs.

De nombreuses méthodes connues, à l'image des procédés décrits dans WO2014141452 ou US2014407959, s'appuient sur une analyse approfondie d'ensembles de documents pour identifier l'existence ou non de relation entre eux.

Or, ces méthodes mettent en oeuvre des moyens reposant exclusivement sur l'analyse des contenus des documents, qu'ils soient textuels ou graphiques, et ne considèrent en aucune manière la façon dont ces contenus sont pris en main par le ou les opérateurs en agissant sur les contenants de ces contenus.

La demande internationale publiée sous le numéro WO2007/113573 divulgue un dispositif de mesure d'interactions d'un utilisateur avec une interface utilisateur.

La demande de brevet publiée sous le numéro US2006/106755 A1 divulgue un dispositif de suivi d'éléments de données dans des communications commerciales électroniques.

La publication "Distview : Support for Building Efficient Collaborative Applications using Replicated Objects", A. Prakash et al divulgue un dispositif de partage de vues d'interactions utilisateur/application au sein d'une application multi-fenêtres.

Il ressort que de telles méthodes et dispositifs n'offrent aucune analyse de la façon dont des connaissances auront été exploitées au cours d'une réflexion.

La présente invention est définie par un procédé selon la revendication 1 et un dispositif selon la revendication 10. Des modes de réalisation supplémentaires sont définis dans les revendications dépendantes.

La présente invention apporte une solution dans laquelle il est identifié, sans intervention spécifique des opérateurs, les informations qui dans le cadre de l'analyse d'un ensemble d'informations ont été plus ou moins utilisées de sorte à organiser les sources d'informations en fonction de l'intérêt qui a pu être porté aux informations.

Suivant le procédé d'aide à la décision, une pluralité de sources d'informations, présupposées utiles à l'analyse d'une situation devant faire l'objet d'au moins une décision, sont référencées, par exemple enregistrées, dans une base de données d'un dispositif, comportant un système de traitement numérique avec des moyens d'affichage et des moyens d'interface, par lequel dispositif au moins un opérateur réalise, au cours d'une session de travail, des interactions sur des contenants d'informations présentés à l'opérateur ou aux opérateurs sous forme visuelle par les moyens d'affichage.

Toute interaction d'un opérateur avec un contenant d'informations, détectée par les moyens d'interface, est mémorisée par le système de traitement numérique et les interactions mémorisées sont interprétées pour déterminer un indice d'intérêt de chacune des sources d'informations à l'origine des dits contenants d'informations.

Sur une requête d'un opérateur ou du système de traitement numérique, le dispositif établit une liste des contenants d'informations de la base de données organisée par valeurs, ou tranches de valeurs, des indices d'intérêt déterminé pour chacune des sources d'informations au cours de la session de travail.

Ainsi le ou les opérateurs qui travaillent sur les informations sont en mesure de se concentrer totalement sur les contenus qui retiennent leur attention sans être perturbés par la gestions de l'ensemble des informations et le dispositif produit lors d'une session de travail un relevé objectif des informations organisées en fonction des interactions, ou de l'absence d'interaction, avec les contenants d'informations correspondant aux sources d'informations à la disposition des opérateurs.

Dans un mode de mise en œuvre, la liste des contenants d'informations de la base de données, organisée par valeurs, ou tranches de valeurs, des indices d'intérêt déterminés pour chacune des sources d'informations, détermine une liste des contenants d'informations de la base de données dont l'indice d'intérêt est inférieur à une valeur seuil prédéfinie et ou définie par un opérateur, ladite valeur seuil étant choisie comme critère pour définir que les sources d'informations correspondantes de la base de données n'ont fait l'objet d'aucune opération significative, c'est-à-dire d'aucune interaction significative de l'ensemble des contenants d'informations de la source d'information considérée, au cours de la séance de travail.

Il est ainsi apporté une solution objective permettant aux opérateurs de prendre conscience a posteriori soit de l'oubli de considérer certaines informations soit de conclure au manque d'intérêt de ces informations dans le cadre du travail réalisé.

Dans une forme de mise en œuvre, toute modification d'un contenant d'informations, résultant d'une interaction d'un opérateur ou d'une action indépendante du système de traitement numérique, déclenche la création d'une table d'état dans une base de données des états des contenants d'informations, ladite table d'état comportant un ensemble de variables définissant un état de l'affichage dudit contenant d'information entre une date de début d'état et une date de fin d'état.

Il est ainsi constitué une base de données dans lequel chaque interaction avec un contenant d'information comporte des attributs de l'interaction pour en déterminer des caractéristiques objectives.

Avantageusement une table d'état comporte un ensemble de variables d'état d'un contenant d'informations, définissant un état dudit contenant d'informations, les dites variables d'état comportant :
- un identifiant du contenant, et ;
- un identifiant de la source d'informations associée, et ;
- une date de début d'état, et ;
- un identifiant de l'élément d'affichage sur lequel est affiché le contenant, et ou ;
- une position, dans un repère associé une surface d'affichage de moyens d'affichage, d'un point de référence, avantageusement le centre, du contenant d'informations, et ou ;
- des dimensions et orientation, dans le repère associé à la surface d'affichage des moyens d'affichage, du contenant d'informations, et ou ;
- un statut du contenant d'information, et ou ;
- un poids de l'affichage du contenant d'information en comparaison de la surface d'affichage des moyens d'affichage, déterminé comme un rapport entre la surface d'affichage totale définie par le ou les moyens d'affichage et la surface d'affichage occupée par le contenant d'informations, et ou ;
- un poids de la surface d'affichage du contenant d'information visible par le ou les opérateurs en comparaison de la surface totale d'affichage dudit contenant d'information, et ;
- une date de fin de cet état.

Ces variables d'état d'une table d'état, qui peuvent être complétées si jugé utile en fonction du contexte de la mise en oeuvre du procédé, déterminent précisément une interaction tant par son objet que par sa chronologie et par sa nature, et constituent un ensemble de caractéristiques susceptibles d'être utilisées dans le calcul d'indice d'intérêt.

Dans une forme de mise en œuvre, l'indice d'intérêt d'une source d'informations est établi par un traitement des variables des tables d'état, créées pendant la session de travail, relatives aux contenants d'informations de la source d'informations considérée, par affectation d'un poids attribué à chacune des variables de la table d'état.

Il est de la sorte possible de consulter la situation relative à l'intérêt apporté à une ou plusieurs sources d'informations à tout moment en cours d'une séance de travail, sans délai, les analyses étant réalisées en étant masquées pendant la séance. Les évolutions des indices d'intérêt peuvent également être suivies en temps réel par un affichage spécifique, par exemple à l'usage exclusif d'un manager du projet.

Suivant un mode de mise en oeuvre du procédé, dans lequel la surface d'affichage d'un moyen d'affichage est constituée par un ensemble d'éléments unitaires d'affichage, des paramètres de pondération spatiale, enregistrés dans une base de données de pondération d'affichage, dans laquelle base de données de pondération d'affichage chaque élément unitaire d'affichage de chacun des moyens d'affichage est associé à un paramètre de pondération spatiale, corrigent les poids des variables de la table d'état et ou l'indice d'intérêt attribué à une source d'informations.

Suivant un mode de mise en oeuvre du procédé, un moyen d'affichage est un écran et un élément unitaire d'affichage est un pixel (élément d'image) dudit écran.

Il est dans ce mode pris en compte des caractéristiques propres aux moyens d'affichage pour tenir compte des différents supports d'affichage qui n'ont pas nécessairement la même importance.

Dans une forme de mise en oeuvre du procédé, une liste des interactions réalisées par un opérateur comporte tout ou partie des opérations de :
- pointage sur un contenant d'informations,
- sélection d'un contenant d'informations,
- manipulation du contenu d'un contenant d'informations ;
- utilisation relative au contenant d'informations d'un élément d'interface permettant de valider la prise en compte de son contenu ;
- activité prolongée d'un ou de plusieurs opérateurs au-dessus ou autour d'un contenant d'informations ;
- Enrichissement et ou modification du contenu d'un contenant d'informations par les moyens d'interface offerts par le contenant d'informations ou tout autre élément logiciel.

La mise en oeuvre d'une liste d'interactions établies, pouvant le cas échéant comporter d'autres interactions que celle définies dans la liste ci-dessus, permet de faciliter la détections d'interactions en disposant d'une nomenclature précise des interactions qu'il est souhaité détecter lorsqu'elles sont réalisées et en attribuant dans la nomenclature les événements détectables et ou mesurables qui les caractérisent.

Dans un mode de mise en œuvre du procédé, un contenant d'informations est affiché par les moyens d'affichage pour chacun des contenants d'informations identifiés comme n'ayant fait l'objet d'aucune interaction significative et ou pour chacune des sources d'informations identifiées comme n'ayant fait l'objet d'aucune opération significative. Il est ainsi apporté aux opérateurs une vision synthétique des informations n'ayant pas été utilisées et la possibilité de poursuivre le processus d'analyse de manière cohérente dans une même session de travail ou une session de travail complémentaire.

Dans un mode de mise en œuvre, chaque interaction réalisée sur un contenant d'informations au cours de la session de travail est mémorisée par le système de traitement numérique avec une datation de ladite interaction et avec un type d'opération identifié comme résultant de ladite interaction ou d'une suite d'interactions, assurant ainsi une traçabilité des interactions réalisées.

Dans un mode de mise en œuvre complémentaire, chaque modification des propriétés d'affichage des contenus est mémorisée par le système de traitement numérique, permettant au système d'analyse d'identifier plus précisément les importances associées aux différentes sources d'informations pendant la réunion.

Avantageusement, un type d'opération résultant d'une interaction ou d'une suite d'interactions est identifié dans une nomenclature stockée dans une mémoire du système de traitement numérique.

Il est ainsi associé aux sources d'informations ayant fait l'objet d'une opération des données permettant de vérifier a posteriori si la ou les opérations sur une source d'informations sont pertinentes ou si elles ne le sont pas et justifie d'un reclassement de la source d'informations avec celles n'ayant fait l'objet d'aucune opération.

Avantageusement la nomenclature identifie tout ou partie des opérations de :
- création et mise à jour d'une base de données inventoriant sources d'informations et contenants d'informations associés ;
- sélection de contenants d'informations de la base de données ou accessibles depuis d'autres sources ;
- affichage des informations d'un ou plusieurs contenants d'informations, par exemple à des fins de présentations, de consultations ou de comparaisons ;
- création d'un nouveau contenant d'informations à partir d'un contenant d'informations existant ;
- modification d'une représentation visuelle du contenu d'un contenant d'informations ;
- modification de l'information d'un contenant d'informations ;
- classement de contenants d'informations ;
- création d'attributs associés à une source d'information.

Ces opérations sont autant que de besoins complétées par d'autres qui peuvent être générales ou spécifiques à un problème particulier.

Pour la mise en œuvre du procédé, un dispositif d'aide à la décision comporte un système de traitement numérique, une base de données de contenants d'informations et de sources d'informations, une base de données des états des contenants d'informations, une base de données d'informations de pondération spatiale, des moyens d'affichage et des moyens d'interface, pour permettre à un opérateur d'agir sur le fonctionnement du dispositif, interconnectés fonctionnellement, ledit système de traitement numérique comportant un ou plusieurs processeurs, comportant des mémoires de données et des mémoires de programmes, et comportant des moyens de connexion aux bases de données, aux moyens d'affichage et aux moyens d'interface, lesdits processeurs, mémoires et moyens de connexion étant connectés à un ou des bus de communications internes pour échanger des instructions et ou des données.

En outre, le système de traitement des données est architecturé et comporte des mémoires d'instructions de programmes pour constituer fonctionnellement :
- au moins une unité d'administration connectée à la base de données et en charge de la gestion des sources d'informations et des contenants d'informations de ladite base de données et de la gestion des relations entre les dites sources d'informations et les dits contenants d'informations ;
- au moins une unité de gestion d'affichages connectée aux moyens d'affichage pour afficher des contenants d'informations et le résultats d'interactions d'opérateurs sur les dits contenants d'informations ;
- au moins une unité d'interprétation des interactions connectée aux moyens d'interface pour interpréter les interactions réalisées par des opérateurs avec lesdits moyens d'interface en actions sur les contenants d'informations et en opérations sur les sources d'informations ;
- au moins une unité d'interprétation de l'évolution des affichages des contenants d'informations, prenant en compte la base de données d'informations de pondération spatiale, pour mettre à jour en temps réel la base de données des états des contenants d'informations ;
- au moins une unité de traitement des opérations organisée pour identifier les sources d'informations, de la base de données, ayant fait l'objet d'au moins une opération, et identifier les sources d'informations, de ladite base de données, n'ayant fait l'objet d'aucune opération significative sur une période prédéfinie, et ce au moyen des informations d'interprétation des interactions et des informations d'évolution des états des contenants d'informations ;
- au moins une unité de synthèse générant des contenants d'informations correspondant aux sources d'informations n'ayant fait l'objet d'aucune opération significative sur une période prédéfinie et ou étant associées à un indice d'intérêt inférieur à un seuil, par exemple un seuil défini prédéfini ou un seuil défini par un opérateur.

Il est ainsi mis à disposition d'un ou de plusieurs opérateurs un dispositif qui réalise une présentation des informations sous la forme de contenants affichés sur lesquels les opérateurs peuvent travailler et qui enregistre en temps réel les interactions sur les contenants d'informations et les états des contenants d'informations et les interprète pour identifier les sources d'informations non utilisées.

Dans une forme de réalisation pour les besoins de certains modes de mise en œuvre du procédé, le dispositif comporte une base de données des états des contenants d'informations, laquelle base comportant des tables d'état, chaque table d'état contenant des variables définissant un affichage sur une durée donnée d'un contenant d'informations.

Suivant une forme de réalisation, une surface d'affichage d'un moyen d'affichage est constituée par un ensemble d'éléments unitaires d'affichage et le dispositif comporte une base de données de pondération d'affichage, laquelle base comporte pour chaque élément unitaire d'affichage des moyens d'affichage un paramètre de pondération spatiale dudit élément unitaire d'affichage.

Dans une forme de réalisation, l'unité de traitement des opérations associe à chacune des sources d'informations un nombre d'opérations définies comme représentatives d'une exploitation de l'information effectuées sur les contenants d'informations sur une période prédéfinie.

Dans une forme de réalisation alternative, l'unité de traitement des opérations associe à chaque contenant d'informations un ensemble d'états associés à sa représentation visuelle permettant de juger de l'évolution de l'importance associée à ce contenant d'information, et donc à la source à laquelle elle est affiliée, et ainsi d'en déterminer des probabilités d'usage sur une période prédéfinie.

Dans une forme de réalisation plus avancée, l'interprétation de l'évolution de l'état d'un contenant est pondérée par des poids hétérogènes associés aux différentes régions du au moins un dispositif d'affichage, qui permettent d'associer d'autant plus d'importance à des contenants affichés à des positions considérées comme plus centrales que d'autres.

Dans une forme de réalisation améliorée, l'unité de traitement des opérations a la capacité de traiter de façon combinée les informations d'interaction sur les contenants et les informations d'affichage des contenants pour en identifier avec d'autant plus de certitude les informations non exploitées et ou les moins exploitées.

Pour permettre à un opérateur isolé de participer à une session de travail avec les mêmes possibilités que celles apportées par le dispositif, avantageusement, le système de traitement des données comporte au moins une unité de communication configurée pour permettre la connexion d'un ordinateur en tant que terminal d'affichage du dispositif et ou en tant que moyen d'interface du dispositif.

Pour permettre à des opérateurs ou groupes d'opérateurs distants de travailler collaborativement, avantageusement, le système de traitement des données comporte au moins une unité de communication configurée pour permettre la connexion d'au moins un dispositif distant conforme au dispositif de sorte que les au moins deux dispositifs fonctionnent en mode miroir et que les interactions et ou affichages et ou opérations identifiées sur un dispositif, local ou distant, soient interprétées dans le ou les autres dispositifs connectés et que les différentes informations d'exploitations et les indices d'intérêts soient consolidés.

La description de l'invention est faite en référence aux figures qui représentent de manière schématique et de manière non limitative :
Figure 1 : une représentation d'un exemple de dispositif d'aide à la décision lors de la consultation d'un ensemble d'informations par au moins un opérateur ;
Figure 2 : un synoptique simplifié du procédé d'aide à la décision dans le contexte d'un travail sur des contenants d'information.

Le procédé de l'invention vise à identifier parmi un ensemble d'informations numériques, supposées utiles à une analyse dans le contexte d'une prise de décision, celles qui n'ont pas été exploitées et ou qui aurait été les moins exploitées au cours d'une réunion dans laquelle un ou plusieurs opérateurs disposent de moyens pour visualiser, pour interagir, et pour partager des informations dans le cadre d'un travail collaboratif, avec des représentations visuelles de ces informations.

Dans la suite de la description il sera utilisé l'expression "contenant d'informations" pour désigner de manière générique toute forme de présentation d'informations à un opérateur. Un contenant d'informations correspond par exemple à une surface graphique, une portion d'écran, un ensemble de pixels ... dans lequel est affichée une représentation visuelle d'une information numérique et un ensemble d'éventuels décorations et éléments graphiques délimitant la région occupée par l'information et à l'intérieur duquel ensemble de décorations et éléments graphiques est souvent affichée la représentation visuelle de l'information numérique.

Un contenant d'informations peut ainsi être, par exemple, une fenêtre telle qu'utilisée dans les systèmes d'exploitation de type WIMP (Windows, Icons, Menus, Pointing device) et permettant d'afficher un document de texte au milieu d'un certain nombre de fonctions accessibles par des boutons et/ou des menus, une image affichée en plein écran sans aucune décoration, une icône générique associée à un nom de fichier, une information affichée au milieu d'autres informations et associée à des éléments d'interface spécifiques sur une table tactile, une miniature pouvant être sélectionnée pour accéder plus précisément à une information...

Sur tout écran d'affichage, un contenant d'informations adapté est ainsi créé pour contenir la représentation visuelle d'une information en fonction de son type : image, vidéo, document texte, tableau, 3D, page internet... ou encore toute combinaison possible de types.

Il sera utilisé l'expression "source d'information" pour désigner l'origine de toute information numérique à même d'être accédée puis interprétée, par exemple par incorporation de codes informatiques, pour en offrir à l'utilisateur, via un contenant d'informations tel que décrit ci-dessus de manière générique, une représentation visuelle.

A titre non limitatif, une source d'information peut ainsi être un fichier local ou distant en regard d'un dispositif sur lequel opèrent un ou plusieurs opérateurs, un fichier texte, un fichier de valeurs alphanumériques structurées en tableau, une base de données, un fichier CAO de formes 2D ou 3D, une url, une adresse IP d'un système informatique mettant à disposition un ou plusieurs services spécifiques tel un partage vidéo du contenu affiché au travers de son écran.

En pratique, par exemple lors d'une session de travail pendant laquelle des informations de diverses sources d'information et ou de divers types sont à la disposition de personnes ou opérateurs participant à la session de travail, chaque opérateur peut être conduit à intervenir sur des informations en effectuant des interactions sur le ou les contenants d'informations associés aux dites informations.

Par exemple un opérateur peut consulter un contenu d'un contenant d'informations, par exemple incorporant la représentation visuelle d'un document, peut le soumettre à un autre opérateur, peut compléter le document par un enrichissement de son contenu ou par des informations complémentaires.

Par exemple, un opérateur peut également utiliser des outils du dispositif lui permettant d'agrandir ou de diminuer les dimensions apparentes d'un contenant d'informations visualisé, pour augmenter ou pour diminuer la surface visuelle occupée par le contenu associé audit contenant d'informations, pour déplacer un contenant d'informations afin de l'afficher de manière à favoriser la visualisation de son contenu par une personne ou un opérateur, pour mettre à jour la représentation visuelle de l'information en changeant de page sur une information textuelle ou de point de vue sur une information 3D, ou encore pour dupliquer un contenant d'informations afin de réaliser une ou des visualisations du contenu spécifiques à l'intention d'autres personnes ou d'autres opérateurs.

Dans tous les cas, pour effectuer ces opérations, l'opérateur met en œuvre des moyens à sa disposition, en particulier, dans le contexte de l'invention, des moyens informatiques de partage, de mémorisation, d'interaction et d'affichage avec des contenants d'informations, pouvant avantageusement être adaptés au contexte d'un travail collaboratif si plusieurs opérateurs sont concernés. Un exemple d'architecture de tels moyens informatiques sera décrit ultérieurement dans le cadre d'un dispositif de l'invention.

Les opérations pouvant être réalisées par un ou plusieurs opérateurs sont par exemple :
- la création et la mise à jour d'une base de données inventoriant sources d'informations et contenants d'informations associés ;
- la sélection de contenants d'informations de la base de données ou accessibles depuis d'autres sources ;
- l'affichage des informations d'un ou plusieurs contenants d'informations, par exemple à des fins de présentations, de consultations ou de comparaisons ;

- la modification d'une représentation visuelle du contenu d'un contenant d'information, par exemple l'orientation d'un objet visualisé en trois dimensions dans un espace virtuel ;
- la modification de l'information d'un contenant d'informations, par exemple à des fins de correction ou à des fins d'enrichissement ;
- la création d'un nouveau contenant d'informations à partir d'un contenant d'informations existant, par exemple par sélection, par exemple par enrichissement ;
- le classement de contenants d'informations ;
- la création d'attributs associés à une source d'information, par exemple un code de pertinence, par exemple une information de rattachement à d'autres informations ...

Il doit être noté que cette liste n'est pas exhaustive mais donne des exemples de types d'opérations pouvant être associées à un contenant et ou une source d'informations, et que ces opérations peuvent être caractérisées indépendamment des contenants et ou sources d'informations eux-mêmes et d'une importance qui pourrait leur être attribuée par un ou des opérateurs.

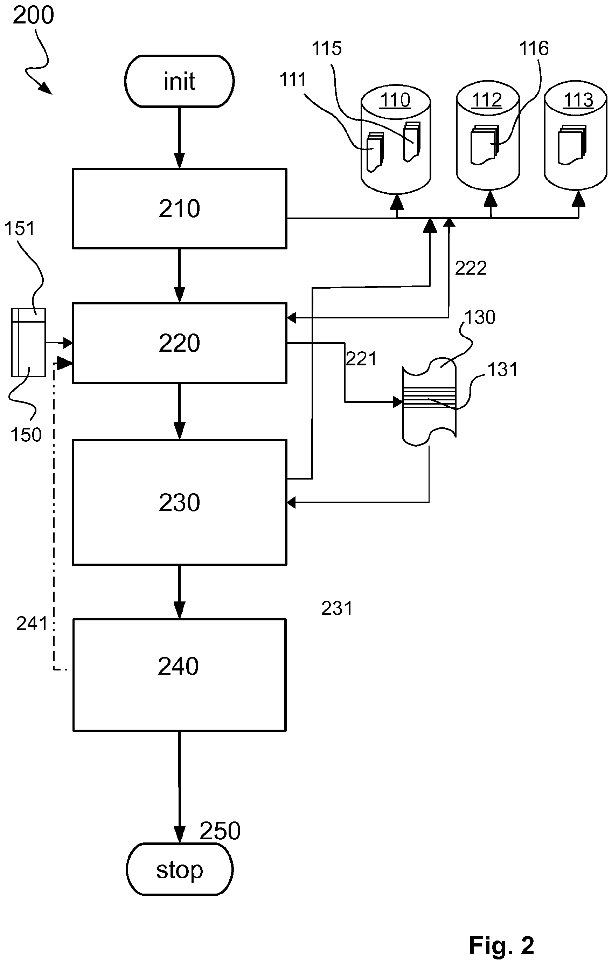

Suivant le procédé de l'invention, présenté sur le schéma synoptique de la figure 2, il est identifié et présenté à un ou plusieurs opérateurs, automatiquement ou à leur demande, par traitement des interactions du ou des opérateurs sur les contenants d'informations et ou de l'évolution des affichages des contenants d'information, un sous-ensemble des sources d'informations constitué des sources d'informations qui n'ont pas encore été exploitées et ou ont été le moins exploitées au cours de la réunion.

**Suivant le procédé, dans une première étape,** un système de traitement numérique 101 est initialisé 210 :
1 - par la création d'une base de données 110 dans laquelle sont stockées les sources d'informations 115 à partir desquelles sont générés par le système de traitement numérique des contenants d'informations 111, au moins un contenant d'informations par source d'informations, également stockés dans la base de données 110 en relation avec les sources d'informations en étant à l'origine ;
2 - par la création d'une base de données 112 des états des contenants d'informations, et ;
3 - accessoirement par la création d'une base de données 113 d'informations de pondération spatiale.

Le système de traitement numérique 101 est également adapté pour, à la demande d'un opérateur, ou par un appel d'un logiciel ou d'un composant logiciel, afficher les différents contenants d'informations 111 associés aux sources d'informations de ladite base de données 110.

Ainsi lors d'une session de travail pendant laquelle il est prévu de pouvoir consulter les informations, l'ensemble des contenants d'informations est accessible et un opérateur, avantageusement chacun des opérateurs, participant à la session de travail peut afficher un contenant d'informations par l'intermédiaire du système de traitement numérique 101.

Il est noté à ce stade du procédé que plusieurs opérateurs peuvent être regroupés autour de moyens d'affichage 120 du système de traitement numérique, moyens d'affichage qui sont alors partagés, ou que des opérateurs, pour certains d'entre eux, peuvent être distants du système de traitement numérique 101 en disposant de moyens d'affichage 120' dédiés, par exemple d'un ordinateur 121, et connectés fonctionnellement au système de traitement numérique, par exemple via un réseau privé ou via un réseau public.

A chaque source d'informations de la base de données 110 est associé dans ladite base de données un fichier d'historisation contenant des informations indiquant, lors de l'étape d'initialisation, que la source d'informations n'a pas encore été exploitée.

A chaque contenant d'informations de la base de données 110 est associée au moins une table d'état 116 dans la base de données des états des contenants d'informations 112, chacune des dites tables d'état comportant un ensemble de variable d'état définissant un état dudit contenant d'information, les dites variables d'état comportant :
1. un identifiant du contenant, et ;
2. un identifiant de la source d'informations associée, et ;
3. une date de début d'état, et ;
4. un identifiant de l'élément d'affichage sur lequel est affiché le contenant, et ou ;
5. une position, dans un repère associé une surface d'affichage de moyens d'affichage, d'un point de référence, avantageusement le centre, du contenant d'informations, et ou ;
6. des dimensions et orientation, dans le repère associé à la surface d'affichage des moyens d'affichage, du contenant d'informations, et ou ;
7. un statut du contenant d'information, et ou ;
8. un poids de l'affichage du contenant d'information en comparaison de la surface d'affichage des moyens d'affichage, par exemple un pourcentage de la surface d'affichage utilisé par le contenant d'information, déterminé comme le rapport entre la surface d'affichage totale définie par le ou les moyens d'affichage et la surface occupée par le contenant d'informations, et ou ;
9. un poids de la surface d'affichage du contenant d'information visible par le ou les opérateurs en comparaison de la surface totale d'affichage dudit contenant d'information, par exemple déterminé comme un rapport entre la surface totale occupée par ledit contenant d'informations de laquelle sont retirées toutes les parties non visibles par l'utilisateur, soit les parties cachées par d'autres contenants d'informations et ou éléments d'interfaces, et la surface totale occupée par ledit contenant d'informations, et ;
10. une date de fin de cet état.

Dans un mode de réalisation du procédé, le statut du contenant d'information peut varier entre "icône", désignant un contenant d'informations utilisé exclusivement comme élément d'interface, ou "interactif", désignant un contenant d'information permettant d'explorer le contenu de la source d'informations associé.

Avantageusement, comme il ressortira de la suite de la lecture, le statut du contenant d'information permet de filtrer les interactions et états jugés ou non comme représentatifs d'une exploitation visuelle du contenant.

Lors de l'étape d'initialisation, une table d'état initial est créée dans la base des données des états des contenants d'informations 112 pour chacun des contenants d'informations de la base de données 110, ladite table d'état initiale décrivant exactement l'état initial de chacun de ces contenants d'informations, c'est-à-dire que chacune des variables de la table d'état est fixée à une valeur caractérisant les conditions dans lesquelles est affiché le contenant d'information.

Par exemple, dans un mode de mise en œuvre du procédé, aucun contenant d'informations exploitable n'est ouvert au lancement de la réunion, et la base de données 112 est ainsi vide au moment de l'initialisation.

Dans une variante de mode de mise en œuvre, une table d'état initial est créée pour chacun des contenants d'informations 111 de la base de données 110 dans laquelle table d'état initial il est attribué aux variables d'état des valeurs par défaut correspondant à un contenant d'information non affiché, par exemple une surface d'affichage à la valeur nulle ou un statut « non affiché ».

Dans un mode de mise en œuvre il est également créé une base de données 113 de paramètres de pondérations spatiales.

Suivant ce mode, à chaque moyen d'affichage 120 associé au dispositif de mise en œuvre du procédé est associé dans la base de données 113 un ensemble des paramètres de pondérations spatiales dudit moyen d'affichage. Par exemple une surface d'affichage d'un moyen d'affichage est constituée par un ensemble d'éléments unitaires d'affichage et, pour chaque élément unitaire d'affichage de chaque moyen d'affichage, est créé un ensemble de paramètres unique associant un facteur de pondération audit élément unitaire.

Dans un mode de mise en œuvre du procédé, les éléments unitaires d'affichage du ou des moyens d'affichage sont des pixels, et le facteur de pondération est un entier entre 0 et 100.

Lors de l'étape d'initialisation 210, la base de données 113 des paramètres de pondération spatiale est initialisée avec des valeurs associées par défaut au moyen d'affichage.

Dans un mode de mise en œuvre du procédé, le facteur de pondération le plus fort est associé à l'élément unitaire d'affichage situé au centre de la surface d'affichage et les facteurs de pondération vont en décroissant avec une distance de l'élément unitaire d'affichage à un centre de la surface d'affichage, jusqu'à atteindre sur la périphérie de l'écran une valeur minimale qui peut être définie par l'utilisateur et ou peut être contenue entre 0 et 25 par exemple.

Dans un mode de mise en œuvre du procédé, plusieurs distributions des facteurs de pondération sont prédéfinies pour le ou les moyens d'affichage en fonction des différents usages envisagés pour le dispositif associé, et le ou les opérateurs peuvent identifier en début de réunion la configuration la plus adaptée à leur usage, voire en déterminer une nouvelle.

**Dans une deuxième étape** du procédé, des données d'activité représentatives des opérations 131 effectuées par le ou les opérateurs lors d'interactions avec les contenants d'informations et / ou sur les contenus sont détectées et identifiées 220, et mémorisées dans un registre 130, par le système de traitement numérique 101, et la base de données 112 des états des contenants d'information est remise à jour en fonction des modifications des états des différents contenants d'information par le ou les opérateurs et ou le système de traitement.

Les interactions avec les contenants d'informations peuvent être réalisées par tout moyen d'interface 140, existant ou à venir, pour interagir avec le système de traitement numérique. De tels moyens d'interface sont, de manière connue dans le domaine informatique, par exemple des claviers de commande, des systèmes de pointage tel que souris ou boules de pointage, des dispositifs de commande vocale, et, dans une forme avantageuse, des détecteurs, associés aux moyens d'affichage 120, de la position des doigts du ou des opérateurs sur des écrans des dits moyens d'affichage.

Avantageusement, ces moyens d'interface incluent également des détecteurs, associés aux moyens d'affichage 120, de la proximité d'un doigt avec les écrans des dits moyens d'affichage, permettant ainsi de capter des gestes réalisés au-dessus de la surface d'affichage et relatifs à des contenants d'informations. Avantageusement, des détecteurs sont agencés pour identifier l'opérateur responsable d'une interaction donnée.

Un contenu et ou le contenant d'informations associé peut être ainsi accédé par sélection d'un contenant d'informations initial pour affichage, manipulation du contenant d'informations pour en modifier ses proportions, déplacement du contenant d'informations...

Un contenu peut être modifié par la superposition d'une information, une sélection d'une information, des annotations, l'apposition de balises ou de tampons numériques ...

Dans un mode de mise en œuvre du procédé, les interactions sur un contenant d'informations 111, affectant ou non le contenu dudit contenant d'informations, sont détectées et le système de traitement numérique 101 enregistre, dans le fichier d'historisation de la source d'information correspondante, que ledit contenant d'information a fait l'objet d'une interaction.

Avantageusement chaque interaction est datée de sorte que le nombre d'interactions au cours d'une période de temps donnée et le cas échéant une chronologie des interactions puisse être reconstituée.

Dans une forme de mise en œuvre, les interactions réalisées par le ou les opérateurs sont de manière non limitative, par exemple les opérations de :
- Pointage sur un contenant d'informations,
- Sélection d'un contenant d'informations,
- Manipulation du contenu du contenant d'informations ;
- Utilisation relative au contenant d'informations d'un élément d'interface permettant de valider la prise en compte de son contenu ;
- Activité prolongée d'un ou de plusieurs opérateurs au-dessus ou autour du contenant d'informations ;
- Enrichissement et ou modification du contenu du contenant d'informations par les moyens d'interface offerts par le contenant d'informations ou tout autre élément logiciel...

Dans une forme de mise en œuvre, au moins pour certaines interactions, l'enregistrement d'une interaction comporte une identification de l'opération, résultant d'une interaction ou d'une séquence d'interactions, parmi une nomenclature 150 d'opérations prédéfinies 151. Dans ce cas l'identification d'une opération est réalisée par le système de traitement numérique 101, de préférence automatiquement par ledit système de traitement numérique. Cette identification est alors effectuée pendant la période où l'opération est réalisée suivant des procédés conventionnels pour caractériser des événements correspondant à des commandes normalement interprétées par les systèmes d'exploitation des dispositifs informatiques.

Dans une forme de réalisation, les moyens d'interface 140 comportent des moyens de sélection d'opérations 141 qui sont à la disposition du ou des opérateurs pour leur permettre d'interagir avec un contenant d'informations pour qualifier eux-mêmes une opération qui doit être enregistrée.

D'une manière générale, comme il sera compris de la suite de la description de l'exemple de mise en œuvre du procédé 200 de l'invention, au moins tous les types d'opérations considérées comme pouvant traduire un intérêt, ou un désintérêt, par un ou des opérateurs vis à vis d'une information seront, dans la mesure du possible, introduits dans la nomenclature 150 des opérations prédéfinies 151.

Dans un mode de mise en œuvre, l'identification d'une opération résultant d'une interaction, ou d'une séquence d'interactions, est prise en compte pour discriminer une interaction intentionnelle parmi un ensemble d'interactions dont certaines peuvent être accidentelles et être des sources d'erreurs dans l'interprétation qui devra être faite des interactions.

Dans un mode de mise en œuvre amélioré du procédé, les informations d'historisation sont pondérées par des caractéristiques des interactions réalisées sur ledit contenant d'informations, telles l'amplitude de l'interaction et ou la durée de l'interaction.

Dans un mode de mise en œuvre du procédé, la nomenclature 150 comporte tout ou partie des opérations de :
- Manipulation de la représentation visuelle d'un contenu d'un contenant d'informations ;
- Duplication d'un contenant d'informations ;
- Enrichissement d'un contenant d'informations ;
- Edition du contenu d'un contenant d'informations ;
- Création manuelle de liens entre contenants d'informations ;
- Envoi d'un contenant d'informations sur une autre surface d'affichage, locale ou distante.

Par ailleurs, chacune des opérations réalisées par un ou plusieurs opérateurs, voire certaines fonctionnalités manuelles ou automatiques que pourraient proposer ou supporter les éléments d'interface du système de traitement, auront pour effet de modifier l'organisation spatiale des contenants d'informations. Toute modification de cette organisation affecte les visibilités, positions, orientations et échelles respectives des différents contenants d'informations, et entraîne une mise à jour de la base de données 112 des états des contenants d'information

Dans un mode de mise en œuvre du procédé, dès lors qu'une opération ayant altéré la représentation visuelle d'un contenant d'information est détectée, l'ensemble des étapes suivantes est réalisé par le système de traitement numérique 101 :
1. Identification du contenant d'information ayant été l'objet d'une manipulation ;
2. Finalisation de l'entrée précédente associée audit contenant d'information opéré, par enregistrement du temps de fin de l'état précédent dans la table d'états associée dans la base de données 112 des états des contenants d'information ;
3. Création d'une nouvelle entrée associée au contenant d'information opéré dans la base de données 112 des états des contenants d'information, dans laquelle sont enregistrées les nouvelles variables d'état dudit contenant d'information ayant été l'objet d'une opération ;
4. Pour chaque contenant d'information dont les anciennes ou nouvelles propriétés du contenant d'information opéré altèrent la visibilité :
   ∘ Finalisation de l'entrée précédente associée audit contenant d'information dont la visibilité était ou est altérée, par enregistrement du temps de fin de l'état précédent dans la tables d'états associée dans la base de données 112 des états des contenants d'information ;
   o Création d'une nouvelle entrée associée audit contenant d'informations dont la visibilité était ou est altérée dans la base de données 112 des états des contenants d'informations, dans laquelle sont enregistrées les nouvelles variables d'état dudit contenant d'information dont la visibilité était ou est altérée.

Par ailleurs, dans un mode de mise en œuvre, la base de données des informations de pondération spatiale 113 peut éventuellement être remise à jour en fonction d'une évolution de l'état du système de traitement et ou d'opérations réalisées par le ou les opérateurs.

**Dans une troisième étape du procédé,** les interactions détectées, les opérations identifiées et les variables d'état des contenants d'informations sont traitées 230 par une unité de traitement des opérations 163 du système de traitement numérique 101 pour mettre à jour la base de données 110 en y enregistrant 231 :
- Pour chaque contenant associé aux interactions détectées et états enregistrés, l'exploitation effective de ce contenant, conséquence de cette nouvelle exploitation par un nouvel opérateur ;
- Pour chaque source d'informations associée à un de ces contenants d'informations associés aux opérations identifiées, l'exploitation effective de cette source, suite à cette nouvelle exploitation par un nouvel opérateur d'un contenant associé à cette source.

Considérant chacun des états de chacun des contenants d'informations, les éventuelles pondérations spatiales, chaque interaction réalisée par un opérateur sur un ou plusieurs contenants d'informations et les opérations identifiées sur les sources d'informations correspondantes, le système de traitement numérique 101 identifie les sources d'informations exploitées associées aux opérations réalisées sur lesdites sources d'informations.

L'unité de traitement met à jour les fichiers d'historisation sur la base d'une importance de l'usage de chaque contenant d'informations, en particulier par l'application de seuils et de règles logiques de caractérisation, et en considération des informations de visualisation absolues (taille, orientation, visibilité du contenant, état), des informations de visualisation relatives à l'écran (position, taille, informations de pondération spatiale) et des informations d'interaction (nombre et amplitude des opérations significatives réalisées sur le contenant d'informations).

Chaque source d'informations 115 est ainsi affectée d'un indice d'intérêt fonction des interactions enregistrées pendant la session de travail avec les contenants d'informations de ladite source d'informations.

Dans un mode de mise en œuvre, l'indice d'intérêt d'une source d'information est établi par le traitement des contenus de l'ensemble des tables d'état 116, créées pendant la session de travail, relatives aux contenants d'informations de la source d'informations considérée.

Dans un mode de mise en œuvre, il est pris en considération les informations de pondération spatiale de la base de données 113, pour corriger le poids d'un contenant d'informations dans un indice d'intérêt.

Lorsque l'indice d'intérêt d'une source d'information est inférieur à un seuil prédéfini, il est déclaré que les contenants d'informations correspondants n'ont été l'objet d'aucune interaction significative.

A titre d'exemple de situations pouvant conduire à un tel résultat de l'indice d'intérêt, il peut être cité le cas d'un contenant d'informations qui n'a été affiché que sous la forme d'un icône miniature, ou encore un contenant qui n'a été affiché pendant une durée courte par exemple moins de dix secondes.

Dans un mode de mise en œuvre du procédé, en plus des éléments de la nomenclature 150, une combinaison de règles logiques et conditions de seuil adéquates permet d'identifier les événements suivants, représentant dans ce mode de mise en œuvre une importance forte associée par le ou les opérateurs au contenant d'information concerné :
- Affichage d'un contenant d'informations avec une visibilité de plus de 80% et une taille de 25% de la surface d'affichage offerte par le moyen d'affichage associé pendant plus de deux minutes ;
- Affichage d'un contenant d'informations avec une taille dépassant 50% de la surface d'affichage offerte par le moyen d'affichage associé pendant plus de 30 secondes ;
- Affichage d'un contenant d'informations avec une visibilité de 100% au centre de l'écran pendant plus de 30 secondes ;
- Affichage d'un contenant d'informations avec une visibilité de 50% pendant plus de 5 minutes à une position sur la surface d'affichage d'une pondération supérieure à la valeur pondération médiane...

Les valeurs indiquées ci-dessus de visibilité et ou de tailles et ou de durée sont données à titre d'exemple et peuvent être adaptées en plus ou en moins en fonction de l'importance qu'il est attribué à chaque critère et de leurs effets constatés sur les résultats obtenus par le procédé qui peuvent être influencés en particulier par les performances des moyens d'affichage du dispositif mis en œuvre.

Avantageusement, si les moyens d'interaction 140 permettent d'identifier l'opérateur ayant réalisé une opération, cette information est enregistrée dans le fichier d'historisation correspondant dans la base de données 110.

Bien que décrit ici dans le contexte d'un traitement a posteriori, le traitement des opérations identifiées peut être réalisé de manière récurrente à intervalles de temps ou de nombre d'opérations plus ou moins grand, voire après chaque nouvelle opération identifiée pour une exploitation en "temps réel".

**Dans une quatrième étape du procédé,** des données enregistrées dans les fichiers d'historisation pendant la session de travail sur les contenants d'informations 111 et les sources d'informations 115 de la base de données 110 sont interprétées 240 pour être exploitées par l'opérateur.

Dans un mode de réalisation, après utilisation en cours de réunion par l'opérateur d'un élément d'interface, physique ou numérique, associé au dispositif de visualisation, le système de traitement numérique 101 identifie dans la base de données 110 lesquelles de ces sources d'informations n'ont pas encore été exploitées et ou ont été les moins exploitées et en présente cet ensemble à au moins un opérateur. Avantageusement, les sources d'informations qui n'ont pas encore été exploitées et ou ont été les moins exploitées sont celles dont les fichiers d'historisation dans la base de données 110 sont toujours à leur état initial ou proche de cet état, c'est-à-dire qu'aucune ou peu d'interactions avec un contenant d'informations incorporant une représentation d'une telle source d'information n'a été enregistrée et ou que cette source d'informations n'a jamais ou peu été affichée par une contenant d'informations présentant des caractéristiques de géométrie et ou de visibilité et ou de position jugées comme révélant une exploitation de son contenu par au moins un opérateur, et par conséquent aucune exploitation de la source d'informations n'a été identifiée.

Par exemple chacune des sources d'informations parmi les non exploitées et ou les moins exploitées est représentée par un nouveau contenant d'informations, lesquels contenants d'informations sont affichés sur un dispositif de visualisation.

Dans un mode de réalisation amélioré, le ou les opérateurs peuvent avoir à disposition un ensemble d'éléments d'interface leur permettant d'ajuster des seuils associés aux fichiers d'historisation et permettant d'affiner dynamiquement l'importance associée aux valeurs d'historisation, pour une identification plus fine des sources d'informations exploitées ou non et ou pour une identification des contenants et ou sources d'informations les plus ou les moins exploitées.

Avantageusement, dans une forme de mise en œuvre, le procédé est repris à la deuxième étape et les moyens d'interface 140 sont utilisés pour interagir avec des contenants d'informations de ce nouvel ensemble de contenants d'informations affiché par le dispositif, et tout ou partie des interactions, par exemple correspondant à des opérations définies dans la nomenclature 150, sont détectées pour ces nouveaux contenants.

La mise en œuvre du procédé 200 est terminée 250 avec la fin d'une session de travail, qui peut par exemple être décrétée par un ou plusieurs opérateurs lorsque toutes les sources et ou contenants d'informations ont chacun fait l'objet d'au moins une exploitation ou qu'à l'issue de la quatrième étape des sources d'informations sont toujours identifiées comme non exploitées et n'ont pas fait l'objet d'une interaction avec un contenant d'information associé.

Les étapes du procédé 200 peuvent être réalisées automatiquement tout au long de la session de travail.

Avantageusement, la base de données 110 est mise à jour en cours de réunion (création d'une nouvelle source d'informations à partir d'une source d'informations existante, création d'un nouveau contenant par duplication d'un contenant existant,...).

Avantageusement, les données correspondant à une session de travail sont archivées par le système 101, en particulier la base de données 110 de sorte à assurer une traçabilité du travail réalisé et le cas échéant pour réinitialiser le système 101 et reprendre ultérieurement une session de travail interrompue.

Avantageusement, les différents critères d'exploitation peuvent également être analysés et interprétés séparément.

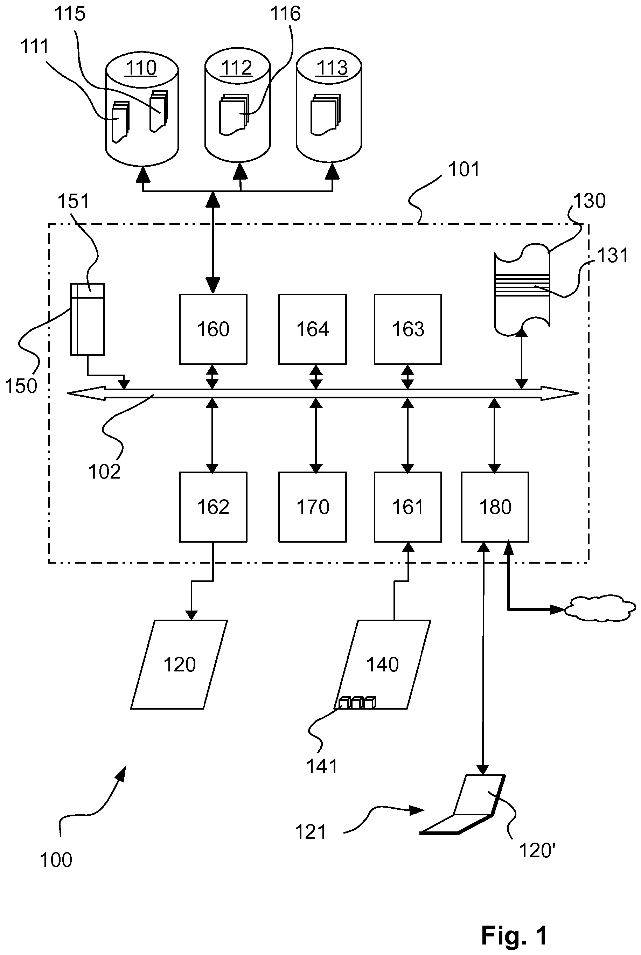

La figure 1 représente un exemple d'un dispositif 100 d'identification de l'usage de sources d'informations adapté à la mise en œuvre du procédé de l'invention.

Le dispositif 100 est un outil d'aide à la réflexion destiné à la mise en œuvre du procédé 200 de l'invention.

Le dispositif 100 comporte un système de traitement numérique 101, des moyens de mémorisation de données, des moyens d'affichage 120 et des moyens d'interface 140 pour agir sur le fonctionnement du système de traitement numérique.

Le système de traitement numérique comporte :
- au moins une unité d'administration 160 d'une base de données 110, ladite unité d'administration étant configurée pour gérer le contenu de ladite base de données, en particulier le chargement, les mises à jour et les accès à des sources d'informations 115 et ou contenants d'informations 111 de ladite base de données;
- au moins une unité de gestion 161 des interactions, d'un ou de plusieurs opérateurs, avec des contenants d'informations par l'intermédiaire des moyens d'interface 140 ;
- une unité de traitement des opérations 163, laquelle dite unité de traitement des opérations interprète les interactions pour identifier les caractéristiques représentatives d'une exploitation d'un contenant d'informations par un ou plusieurs opérateurs, parmi lesquelles : les changements de visibilité, de géométrie et ou de position dudit contenant d'informations, et ou l'exécution d'opérations sur les contenants d'informations 111, les dites opérations étant avantageusement identifiées dans une nomenclature 150 d'opérations 151 prédéfinies mémorisées dans une mémoire du dispositif 100 ;

- au moins une unité de gestion d'affichage 162 réalisant, outre les fonctions conventionnelles d'affichage des contenants d'informations 111, les affichages nécessaires à la gestion des interactions réalisées sur les contenants d'informations, en particulier des boutons virtuels de sélection et de validation des opérations, au moins lorsque l'identification d'opérations nécessite une interaction d'un opérateur ;
- au moins une unité de synthèse 164 produisant une ou des représentations de résultats obtenus par le procédé, ladite unité de synthèse comportant des moyens d'interprétation des interactions d'au moins un opérateur pour paramétrer les représentations et pour mener une exploration desdites représentations.

Dans une forme de réalisation, le dispositif 100 comporte au moins une unité d'action 170 sur les contenants d'informations de sorte à réaliser en fonction d'ordres reçus par des commandes d'au moins un opérateur et ou par des instructions du dispositif la lecture, l'affichage, la modification et l'enregistrement de chaque type de contenant d'informations.

Une telle unité d'action 170 correspond à des moyens de traitement ordinaires d'un système informatique disposant des programmes nécessaires pour chaque type de contenant d'informations et, suivant le contenant d'informations, des logiciels du type traitement de texte, du type tableur, du type traitement des images et des vidéos, du type CAO ....

Dans une forme de réalisation, l'unité d'action 170 correspond à une ressource extérieure échangeant les informations numériques nécessaires au fonctionnement du dispositif via un réseau tel qu'un réseau Ethernet.

Comme l'illustre à titre d'exemple la figure 1, le dispositif présente par exemple une architecture de calculateur numérique comportant un ou plusieurs processeurs dans lequel les unités fonctionnelles, et les diverses mémoires nécessaires, sont agencées autour d'un ou plusieurs bus 102 de communication numérique et qui est connecté fonctionnellement, pour le moins, aux moyens d'affichage 120 et aux moyens d'interface 140.

Les moyens d'affichage 120 sont architecturés autour d'au moins un dispositif de visualisation ayant les capacités d'afficher via des contenants d'informations les différents types d'informations des sources d'informations susceptibles d'être entrées dans la base de données 110. Avantageusement les moyens d'affichage 120 disposent également de capacités à traiter des sources d'informations audio pour reproduire les sons, associés ou non à d'autres types de fichiers, par exemple des sources d'informations caractérisant des sensations musculaires au travers de systèmes de restitution d'efforts.

Dans une forme de réalisation avantageuse, au moins un dispositif de visualisation est un écran de visualisation de dimensions et de résolution suffisante pour afficher une pluralité de contenus avec une qualité suffisante pour en permettre une lecture ou une analyse par un ou plusieurs opérateurs simultanément et permettre à ces mêmes opérateurs d'interagir, autant que possible simultanément, sur les contenus ou sur les contenants d'informations visualisés.

Les moyens d'interface 140 consistent en tout moyen connu pour la saisie de données et pour la manipulation de fichiers numériques et ou de leurs contenus. Dans une forme avantageuse de réalisation, les moyens d'interface 140 sont intégrés à au moins un dispositif de visualisation des moyens d'affichage, par exemple sous la forme d'un écran tactile.

Un tel écran tactile peut être placé dans un plan sensiblement à l'horizontale, pour favoriser la collaboration entre les utilisateurs, dans un plan sensiblement à la verticale, pour favoriser la lecture et le partage de l'information, ou à quelle qu'autre orientation susceptible de favoriser des cas d'usage spécifiques.

Avec une telle architecture d'interface, le ou les opérateurs peuvent directement interagir avec les informations numériques affichées en posant directement leurs doigts sur les contenants de ces informations, par exemple pour manipuler lesdites informations numériques affichées (interaction active) ou pour attirer l'attention des autres opérateurs sur certaines parties d'une information numérique donnée ou sur des relations existant entre plusieurs de ces informations numériques (interaction passive).

Avantageusement, des gestes réalisés par un opérateur sur la surface tactile d'un écran à seule fin d'attirer l'attention des autres participants seront enregistrés par le dispositif 100 comme des interactions ainsi que leurs interprétations en tant qu'opérations 131 sur les sources d'informations suivant la nomenclature 150 dans une analyse réalisée par l'unité de traitement des opérations, et ce même si une fonction logicielle a été utilisée pour bloquer les modifications d'affichage correspondant à l'interprétation des événements tactiles.

Dans une forme alternative de réalisation, les moyens d'affichage 120 comportent deux ou plus écrans tactiles de sorte qu'un ou plusieurs opérateurs ou différents groupes d'opérateurs disposent chacun de la possibilité de visualiser et d'interagir avec les contenants d'informations affichées tout en continuant à partager les interactions et les opérations du fait d'un affichage commun aux écrans.

Dans une forme alternative de réalisation, des terminaux informatiques affectés en tout ou partie à un ou des opérateurs sont raccordés via un réseau numérique au dispositif 100 de sorte à échanger et ou transmettre, en début ou en cours d'une session de travail, des sources d'informations et ou contenants d'informations à la base de données 110.

Avantageusement, dans une forme de réalisation améliorée du procédé, la nomenclature d'opérations 150 comporte toutes les opérations réalisées par l'opérateur d'un terminal informatique, sur son terminal avec le dispositif d'entrée associé à son terminal raccordé au dispositif 100, lorsque le contenu affiché, sur son terminal, à l'intérieur d'un contenant d'informations présentant des caractéristiques de géométrie, de position et de visibilité supérieures aux seuils pré-indiqués.

Dans une forme alternative de réalisation, au moins deux écrans tactiles sont intégrés au dispositif, dont au moins un écran tactile horizontal affecté à des échanges interactifs entre le ou les opérateurs et dont au moins un écran tactile vertical affecté à la visualisation d'informations critiques.

Dans un mode de réalisation, le dispositif 100 comporte des moyens de connexion à un réseau de communication par une unité de communication 180 réalisant une synchronisation de deux ou plus dispositifs conformes au dispositif de l'invention.

Dans une forme de réalisation, plusieurs dispositifs 100 sont raccordés via un réseau numérique de sorte à échanger et ou transmettre, en début ou en cours d'une session de travail, des sources d'informations et ou contenants d'informations entre les bases de données 110. Avantageusement, selon les réglages réciproques des dispositifs, les informations d'exploitation de leurs bases de données 110 respectives peuvent ou non être synchronisées.

L'unité de communication 180 réalise la synchronisation de deux dispositifs 100, pouvant être situés dans des lieux distants, en assurant :
- une initialisation similaire sinon identique de chacun des dispositifs ;
- la recopie en temps réel des bases de contenants d'informations 110, lors de l'initialisation et également en fonction des modifications apportées aux dites bases lors des sessions de travail ;
- la transmission en temps réel de données permettant à chacun des dispositifs de reconstruire tout ou partie des affichages et de leurs modifications sur les moyens d'affichage 120.

Par temps réel, il doit ici être compris que les recopies de tout ou partie des affichages et ou interactions d'un dispositif par un autre sont réalisées sans autres latences que celles imposées par les capacités des moyens de communication qui de préférence sont dimensionnés et utilisent des protocoles de communication permettant à au moins un opérateur distant de travailler de manière quasi-simultanée de sorte que les différents dispositifs fonctionnent en miroir.

Il est ainsi permis à des opérateurs ou des groupes d'opérateurs distants de travailler collaborativement en exploitant les mêmes informations présentées de la même manière et soumises aux mêmes interactions simultanément.

Avantageusement, les bases de sources d'informations et de leurs valeurs d'exploitation de deux dispositifs connectés par des moyens de connexion réseau peuvent être comparées l'une à l'autre, dans l'objectif de permettre à un groupe d'opérateurs de valider la prise en compte d'une information qui aurait été transmise à l'autre groupe.

Le dispositif de l'invention permet à un ou plusieurs utilisateurs, à tout instant d'une session de travail pour laquelle il aura utilisé les moyens de mise à jour de la base de données et les moyens d'interaction et d'affichage mis à sa disposition, de déterminer objectivement, à sa demande ou automatiquement, via au moins une interface de visualisation, lesquelles des sources d'informations de la base n'ont pas encore été exploitées et ou ont été les moins exploitées dans la réflexion, ce qui aura été déterminé en fonction des interactions préalablement réalisées sur des sous-ensembles des contenants d'informations associés à ces sources d'informations numériques.

## Revendications

1. Procédé (200) dans lequel une pluralité de sources d'informations (115), présupposées utiles à l'analyse d'une situation devant faire l'objet d'au moins une décision, sont référencées dans une base de données (110) d'un dispositif (100), comportant un système de traitement numérique (101) avec des moyens d'affichage (120) et des moyens d'interface (140), ledit procédé comprenant les étapes suivantes :
- le dispositif présente visuellement, à au moins un opérateur, au moins une information accessible d'une source d'informations (115) par l'affichage d'un contenant d'informations stocké dans la base de données (110) en association avec ladite source d'informations ;
- ledit au moins un opérateur réalise, avec les moyens d'interface (140), au cours d'une session de travail, des interactions sur des contenants d'informations (111) présentés audit au moins un opérateur sous forme visuelle par les moyens d'affichage (120) ;
- toute interaction dudit au moins opérateur avec un contenant d'informations (111), détectée par les moyens d'interface (140), est mémorisée par le système de traitement numérique (101) ;
- toute modification d'un contenant d'informations, résultant d'une desdites interactions ou d'une action indépendante du système de traitement numérique (101), déclenche la création, par le système de traitement numérique (101), d'une table d'état (116) dans une base de données des états des contenants d'informations (112), ladite table d'état comportant un ensemble de variables définissant un état de l'affichage dudit contenant d'information entre une date de début d'état et une date de fin d'état
- lesdites interactions mémorisées sont interprétées pour déterminer un indice d'intérêt de chacune des sources d'informations (115) à l'origine des dits contenants d'informations, l'indice d'intérêt de ladite chacune source d'informations (115) étant établi par un traitement des variables des tables d'état (116), créées pendant la session de travail, relatives aux contenants d'informations de ladite chacune source d'informations considérée, par affectation d'un poids attribué à chacune des variables de la table d'état ;
- sur une requête d'un opérateur ou du système de traitement numérique, le dispositif (100) établit une liste des contenants d'informations (111) de la base de données (110) organisée par valeurs, ou tranches de valeurs, des indices d'intérêt déterminés pour chacune des sources d'informations (115) au cours de la session de travail.

2. Procédé suivant la revendication 1 dans lequel la liste des contenants d'informations (111) de la base de données (110) organisée par valeurs, ou tranches de valeurs, des indices d'intérêt déterminés pour chacune des sources d'informations (115) détermine une liste des contenants d'informations (111) de la base de données (110) dont l'indice d'intérêt est inférieur à une valeur seuil prédéfinie et ou définie par un opérateur, ladite valeur seuil étant choisie comme critère pour définir que les sources d'informations (115) correspondantes de la base de données (110) n'ont fait l'objet d'aucune opération significative, c'est-à-dire d'aucune interaction significative de l'ensemble des contenants d'informations de la source d'information considérée, au cours de la session de travail.

3. Procédé suivant l'une des revendications précédentes dans lequel une table d'état (116) comporte un ensemble de variables d'état d'un contenant d'informations, définissant un état dudit contenant d'informations, les dites variables d'état comportant :
• un identifiant du contenant, et ;
• un identifiant de la source d'informations associée, et ;
• une date de début d'état, et ;
• un identifiant d'un élément d'affichage sur lequel est affiché le contenant, et ou ;
• une position, dans un repère associé à une surface d'affichage des moyens d'affichage, d'un point de référence, avantageusement un centre, du contenant d'informations, et ou ;
• des dimensions et orientation, dans le repère associé à la surface d'affichage des moyens d'affichage, du contenant d'informations, et ou ;
• un statut du contenant d'informations, et ou ;
• un poids de l'affichage du contenant d'informations en comparaison de la surface d'affichage des moyens d'affichage, déterminé comme un rapport entre la surface d'affichage totale définie par le ou les moyens d'affichage et la surface d'affichage occupée par le contenant d'informations, et ou ;
• un poids de la surface d'affichage du contenant d'information visible par le ou les opérateurs en comparaison de la surface totale d'affichage dudit contenant d'information, et ;
• une date de fin de cet état.

4. Procédé suivant la revendication 3, dans lequel une surface d'affichage d'un moyen d'affichage est constituée par un ensemble d'éléments unitaires d'affichage et dans lequel des paramètres de pondération spatiale enregistrés dans une base de données de pondération d'affichage (113), dans laquelle base de données de pondération d'affichage chaque élément unitaire d'affichage de chacun des moyens d'affichage est associé à un paramètre de pondération spatiale dudit élément unitaire d'affichage, corrigent les poids des variables de la table d'état et ou l'indice d'intérêt attribué à une source d'informations.

5. Procédé suivant l'une des revendications précédentes dans lequel une liste des interactions réalisées par un opérateur comporte tout ou partie des opérations de :
• pointage sur un contenant d'informations,
• sélection d'un contenant d'informations,
• manipulation du contenu d'un contenant d'informations ;
• utilisation relative au contenant d'informations d'un élément d'interface permettant de valider la prise en compte de son contenu ;
• activité prolongée d'un ou de plusieurs opérateurs au-dessus ou autour d'un contenant d'informations ;
• Enrichissement et ou modification du contenu d'un contenant d'informations par les moyens d'interface offerts par le contenant d'informations ou tout autre élément logiciel.

6. Procédé suivant l'une des revendications précédentes prise en combinaison avec la revendication 2 dans lequel un contenant d'informations est affiché par les moyens d'affichage (120) pour chacun des contenants d'informations identifiés comme n'ayant fait l'objet d'aucune interaction significative et ou pour chacune des sources d'informations identifiées comme n'ayant fait l'objet d'aucune opération significative.

7. Procédé suivant l'une des revendications précédentes dans lequel chaque interaction réalisée sur un contenant d'informations au cours de la session de travail est mémorisée par le système de traitement numérique (101) avec une datation de ladite interaction et avec un type d'opération identifié comme résultant de ladite interaction ou d'une suite d'interactions.

8. Procédé suivant la revendication 6 dans lequel un type d'opération résultant d'une interaction ou d'une suite d'interactions est identifié dans une nomenclature (150) stockée dans une mémoire du système de traitement numérique (101).

9. Procédé suivant la revendication 7 dans lequel la nomenclature (150) identifie tout ou partie des opérations de :
• création et la mise à jour d'une base de données inventoriant les sources d'informations et les contenants d'informations associés ;
• sélection de contenants d'informations de la base de données ou accessibles depuis d'autres sources ;
• affichage des informations d'un ou plusieurs contenants d'informations, par exemple à des fins de présentations, de consultations ou de comparaisons ;
• modification d'une représentation visuelle du contenu d'un contenant d'informations ;
• modification de l'information d'un contenant d'informations ;
• création d'un nouveau contenant d'informations à partir d'un contenant d'informations existant ;
• classement de contenants d'informations ;
• création d'attributs associés à une source d'informations.

10. Dispositif (100) d'aide configuré pour mettre en oeuvre un procédé selon l'une des revendications précédentes, ledit dispositif comportant un système de traitement numérique (101), une base de données (110) de contenants d'informations (111) et de sources d'informations (115), des moyens d'affichage (120) et des moyens d'interface (140), pour permettre à un opérateur d'agir sur le fonctionnement du dispositif, interconnectés fonctionnellement, ledit système de traitement numérique comportant un ou plusieurs processeurs, comportant des mémoires de données et des mémoires de programmes, et comportant des moyens de connexion à la base de données (110), aux moyens d'affichage (120) et aux moyens d'interface (140), lesdits processeurs, mémoires et moyens de connexion étant connectés à un ou des bus de communications internes (102) pour échanger des instructions et ou des données, **caractérisé en ce que** le système de traitement des données (101) est architecturé et comporte des mémoires d'instructions de programmes pour constituer fonctionnellement :
• au moins une unité d'administration (160) connectée à la base de données (110) et en charge de la gestion des sources d'informations (115) et des contenants d'informations (111) de ladite base de données et de la gestion des relations entre les dites sources d'informations et les dits contenants d'informations ;
• au moins une unité de gestion d'affichages (162) connectée aux moyens d'affichage (120) pour afficher des contenants d'informations (111) et le résultats d'interactions d'opérateurs sur les dits contenants d'informations ;
• au moins une unité d'interprétation des interactions (161) connectée aux moyens d'interface (140) pour interpréter les interactions réalisées par des opérateurs avec lesdits moyens d'interface en actions sur les contenants d'informations (111) et en opérations sur les sources d'informations (115) ;
• au moins une unité de traitement des opérations (163) organisée pour identifier les sources d'informations, de la base de données (110), ayant fait l'objet d'au moins une opération et identifier les sources d'informations, de ladite base de données, n'ayant fait l'objet d'aucune opération significative sur une période prédéfinie ;
• au moins une unité de synthèse (164) générant des contenants d'informations correspondant aux sources d'informations n'ayant fait l'objet d'aucune opération significative sur une période prédéfinie et ou étant associées à un indice d'intérêt inférieur à un seuil.

11. Dispositif suivant la revendication 10 comportant une base de données des états des contenants d'informations (112), laquelle base comportant des tables d'état (116), chaque table d'état contenant des variables définissant un affichage sur une durée donnée d'un contenant d'informations.

12. Dispositif suivant la revendication 11, dans lequel une surface d'affichage d'un moyen d'affichage est constituée par un ensemble d'éléments unitaires d'affichage et comportant une base de données de pondération d'affichage (113), laquelle base comporte pour chaque élément unitaire d'affichage de chacun des moyens d'affichage un paramètre de pondération spatiale dudit élément unitaire d'affichage.

13. Dispositif suivant l'une des revendications 10 à 12 dans lequel l'unité de traitement des opérations (163) associe à chacune des sources d'informations (115) un nombre d'opérations effectuées sur les sources d'informations (115) sur une période prédéfinie.

14. Dispositif suivant l'une des revendications 10 à 13 dans lequel le système de traitement des données (101) comporte au moins une unité de communication (180) configurée pour permettre la connexion d'un ordinateur (121) en tant que terminal d'affichage du dispositif (100) et ou en tant que moyen d'interface du dispositif (100).

15. Dispositif suivant l'une des revendications 10 à 14 dans lequel le système de traitement des données (101) comporte au moins une unité de communication (180) configurée pour permettre la connexion d'au moins un dispositif distant conforme au dispositif (100) de sorte que les au moins deux dispositifs fonctionnent en mode miroir et que les interactions et ou opérations identifiées sur un dispositif, local ou distant, soient identifiées dans le ou les autres dispositifs connectés et que les différentes informations d'exploitations et les indices d'intérêts soient consolidés.

## Patentansprüche

1. Verfahren (200), bei dem in einer Datenbank (110) einer Vorrichtung (100), die ein digitales Verarbeitungssystem (101) mit Anzeigemitteln (120) und Schnittstellenmitteln (140) umfasst, eine Vielzahl von Informationsquellen (115) aufgeführt werden, von denen angenommen wird, dass sie für die Analyse einer Situation, die Gegenstand von mindestens einer Entscheidung sein soll, nützlich sind, wobei das Verfahren die folgenden Schritte umfasst:
- die Vorrichtung stellt mindestens einem Bediener mindestens eine zugängliche Information aus einer Informationsquelle (115) visuell dar, indem sie einen in der Datenbank (110) gespeicherten Informationsträger in Verbindung mit der Informationsquelle anzeigt;
- der mindestens eine Bediener führt mit den Schnittstellenmitteln (140) während einer Arbeitssitzung Interaktionen mit Informationsträgern (111) durch, die dem mindestens einen Bediener in visueller Form von den Anzeigemitteln (120) dargestellt werden;
- jede Interaktion des mindestens einen Bedieners mit einem Informationsträger (111), die von den Schnittstellenmitteln (140) erfasst wird, wird von dem digitalen Verarbeitungssystem (101) gespeichert;
- jede Änderung eines Informationsträgers, die sich aus einer der Interaktionen oder aus einer vom digitalen Verarbeitungssystem (101) unabhängigen Aktion ergibt, löst die Erstellung einer Statustabelle (116) in einer Datenbank der Status der Informationsträger (112) durch das digitale Verarbeitungssystem (101) aus, wobei die Statustabelle einen Satz von Variablen umfasst, die einen Anzeigestatus des Informationsträgers zwischen einem Statusstartdatum und einem Statusenddatum definieren
- die gespeicherten Interaktionen werden ausgewertet, um einen Interessenindex jeder der Informationsquellen (115) am Ursprung der Informationsträger zu bestimmen, wobei der Interessenindex jeder Informationsquelle (115) durch eine Verarbeitung der Variablen der Statustabellen (116) erstellt wird, die während der Arbeitssitzung erstellt werden und sich auf die Informationsträger jeder betrachteten Informationsquelle beziehen, indem jeder der Variablen der Statustabelle ein Gewicht zugewiesen wird;
- auf Anfrage eines Bedieners oder des digitalen Verarbeitungssystems erstellt die Vorrichtung (100) eine Liste der Informationsträger (111) der Datenbank (110), die nach Werten oder Wertebereichen des Interessenindex organisiert sind, die für jede der Informationsquellen (115) während der Arbeitssitzung bestimmt wurden.

2. Verfahren nach Anspruch 1, bei dem die Liste der Informationsträger (111) der Datenbank (110), die nach Werten oder Wertebereichen der für jede der Informationsquellen (115) ermittelten Interessenindize organisiert ist, eine Liste der Informationsträger (111) der Datenbank (110) bestimmt, deren Interessenindex kleiner als ein vordefinierter und oder von einem Bediener definierter Schwellenwert ist, wobei der Schwellenwert als ein Kriterium gewählt wird, um zu definieren, dass die entsprechenden Informationsquellen (115) der Datenbank (110) während der Arbeitssitzung nicht Gegenstand einer bedeutenden Operation, das heißt einer bedeutenden Interaktion aller Informationsträger der fraglichen Informationsquelle, gewesen sind.

3. Verfahren nach einem der vorhergehenden Ansprüche, wobei eine Statustabelle (116) einen Satz von Statusvariablen eines Informationsträgers umfasst, die einen Status des Informationsträgers definieren, wobei die Statusvariablen umfassen:
• eine Kennnummer des Trägers, und;
• eine Kennnummer der zugehörigen Informationsquelle, und;
• ein Statusstartdatum, und;
• eine Kennnummer eines Anzeigeelements, auf dem der Träger angezeigt wird, und oder;
• eine Position eines Bezugspunkts, vorteilhafterweise eines Mittelpunkts, des Informationsträgers in einem Bezugsrahmen, der mit einer Anzeigefläche der Anzeigemittel verbunden ist, und oder;
• die Abmessungen und die Ausrichtung des Informationsträgers in dem mit der Anzeigefläche des Anzeigemittels verbundenen Bezugsrahmen, und oder;
• einen Status des Informationsträgers, und oder;
• ein Gewicht der Anzeige des Informationsträgers im Vergleich zur Anzeigefläche der Anzeigemittel, bestimmt als Verhältnis der gesamten durch das oder die Anzeigemittel definierten Anzeigefläche zu der durch den Informationsträger belegten Anzeigefläche, und oder;
• ein Gewicht des für den oder die Bediener sichtbaren Anzeigebereichs des Informationsträgers im Vergleich zum gesamten Anzeigebereich des Informationsträgers, und;
• ein Enddatum dieses Status.

4. Verfahren nach Anspruch 3, wobei ein Anzeigebereich eines Anzeigemittels durch einen Satz von Anzeigeeinheitselementen gebildet wird und wobei räumliche Gewichtungsparameter, die in einer Anzeigegewichtungsdatenbank (113) gespeichert sind, wobei in der Anzeigegewichtungsdatenbank jedes Anzeigeeinheitselement jedes der Anzeigemittel mit einem räumlichen Gewichtungsparameter des Anzeigeeinheitselements verknüpft ist, die Gewichte der Statustabellenvariablen und oder des einer Informationsquelle zugeordneten Interessenindex korrigieren.

5. Verfahren nach einem der vorhergehenden Ansprüche, wobei eine Liste der Interaktionen, die von einem Bediener durchgeführt werden, alle oder einen Teil der folgenden Operationen umfasst:
• Verweis auf einen Informationsträger,
• Auswahl eines Informationsträgers,
• Manipulation des Inhalts eines Informationsträgers;
• Verwendung eines Schnittstellenelements für den Informationsträger, anhand dessen überprüft werden kann, ob sein Inhalt berücksichtigt worden ist;
• länger andauernde Tätigkeit eines oder mehrerer Bediener über oder um einen Informationsträger;
• Anreicherung und oder Änderung des Inhalts eines Informationsträgers durch die vom Informationsträger oder einem anderen Softwareelement angebotenen Schnittstellenmittel.

6. Verfahren nach einem der vorhergehenden Ansprüche in Verbindung mit Anspruch 2, wobei ein Informationsträger von den Anzeigemitteln (120) für jeden der Informationsträger, die als nicht bedeutend interagiert identifiziert wurden, und oder für jede der Informationsquellen, die als nicht bedeutend interagiert identifiziert wurden, angezeigt wird.

7. Verfahren nach einem der vorhergehenden Ansprüche, bei dem jede während der Arbeitssitzung an einem Informationsträger durchgeführte Interaktion von dem digitalen Verarbeitungssystem (101) mit einer Datierung der Interaktion und mit einer Art von Operation gespeichert wird, die als Ergebnis der Interaktion oder einer Folge von Interaktionen identifiziert wird.

8. Verfahren nach Anspruch 6, bei dem eine Art von Operation, die sich aus einer Interaktion oder einer Folge von Interaktionen ergibt, in einer Stückliste (150) identifiziert wird, die in einem Speicher des digitalen Verarbeitungssystems (101) gespeichert ist.

9. Verfahren nach Anspruch 7, wobei die Stückliste (150) alle oder einige der Vorgänge identifiziert, die:
• eine Datenbank, die Informationsquellen und zugehörigen Informationsträgern auflistet, erstellen und aktualisieren;
• aus der Datenbank oder aus anderen Quellen zugänglichen Informationsträger auswählen;
• Informationen aus einem oder mehreren Informationsträgern, zum Beispiel zu Präsentations-, Beratungs- oder Vergleichszwecken, anzeigen;
• eine visuelle Darstellung des Inhalts eines Informationsträgers ändern;
• Information eines Informationsträgers ändern;
• einen neuen Informationsträger aus einem bestehenden Informationsträger erstellen;
• Informationsträger klassifizieren;
• Attribute erstellen, die mit einer Informationsquelle verbunden sind.

10. Vorrichtung (100) zur Hilfestellung, die so konfiguriert ist, dass sie ein Verfahren nach einem der vorhergehenden Ansprüche implementiert, wobei die Vorrichtung ein digitales Verarbeitungssystem (101), eine Datenbank (110) von Informationsträgern (111) und Informationsquellen (115), Anzeigemittel (120) und Schnittstellenmittel (140) umfasst, um es einem Bediener zu ermöglichen, auf den Betrieb der Vorrichtung einzuwirken, die operativ miteinander verbunden sind, wobei das digitale Verarbeitungssystem einen oder mehrere Prozessoren umfasst, mit Datenspeichern und Programmspeichern und mit Mitteln zur Verbindung mit der Datenbank (110), mit den Anzeigemitteln (120) und mit den Schnittstellenmitteln (140), wobei die Prozessoren, die Speicher und die Verbindungsmittel mit einem oder mehreren internen Kommunikationsbussen (102), zum Austauschen von Anweisungen oder Daten, verbunden sind, **dadurch gekennzeichnet, dass** das Datenverarbeitungssystem (101) so aufgebaut ist und Programmbefehlsspeicher enthält, um funktionell:
• mindestens eine Verwaltungseinheit (160), die mit der Datenbank (110) verbunden und mit der Verwaltung der Informationsquellen (115) und der Informationsträger (111) der Datenbank sowie mit der Verwaltung der Verknüpfungen zwischen den Informationsquellen und den Informationsträgern beauftragt ist;
• mindestens eine mit den Anzeigemitteln (120) verbundene Anzeigeverwaltungseinheit (162) zur Anzeige von Informationsträgern (111) und der Ergebnisse von Bedienerinteraktionen auf den Informationsträgern;
• mindestens eine Interaktionsauswertungseinheit (161), die mit den Schnittstellenmitteln (140) verbunden ist, um die von den Bedienern mit den Schnittstellenmitteln durchgeführten Interaktionen in Aktionen an den Informationsträgern (111) und Operationen an den Informationsquellen (115) auszuwerten;
• mindestens eine Operationsverarbeitungseinheit (163), die so beschaffen ist, dass sie die Informationsquellen der Datenbank (110) identifiziert, die Gegenstand mindestens einer Operation waren, und die Informationsquellen der Datenbank identifiziert, die während eines vordefinierten Zeitraums nicht Gegenstand einer bedeutenden Operation gewesen sind;
• mindestens eine Syntheseeinheit (164), die Informationsträger erzeugt, die den Informationsquellen entsprechen, die während eines vordefinierten Zeitraums nicht Gegenstand einer bedeutenden Operation gewesen sind und oder die mit einem Interessenindex unterhalb eines Schwellenwertes verbunden sind
aufzubauen.

11. Vorrichtung nach Anspruch 10, die eine Datenbank der Status der Informationsträger (112) umfasst, wobei die Datenbank Statustabellen (116) umfasst, wobei jede Statustabelle Variablen enthält, die eine Anzeige eines Informationsträgers über eine gegebene Zeitperiode definieren.

12. Vorrichtung nach Anspruch 11, wobei eine Anzeigefläche eines Anzeigemittels durch einen Satz von Anzeigeeinheitselementen gebildet wird und eine Anzeigegewichtungsdatenbank (113) umfasst, wobei die Datenbank für jedes Anzeigeeinheitselement jedes der Anzeigemittel einen räumlichen Gewichtungsparameter des Anzeigeeinheitselements umfasst.

13. Vorrichtung nach einem der Ansprüche 10 bis 12, wobei die Operationsverarbeitungseinheit (163) jeder der Informationsquellen (115) eine Anzahl von Operationen zuordnet, die über einen vordefinierten Zeitraum an den Informationsquellen (115) durchgeführt wurden.

14. Vorrichtung nach einem der Ansprüche 10 bis 13, wobei das Datenverarbeitungssystem (101) mindestens eine Kommunikationseinheit (180) umfasst, die so konfiguriert ist, dass sie den Anschluss eines Computers (121) als Anzeigeterminal der Vorrichtung (100) und oder als Schnittstellenmittel der Vorrichtung (100) ermöglicht.

15. Vorrichtung nach einem der Ansprüche 10 bis 14, wobei das Datenverarbeitungssystem (101) mindestens eine Kommunikationseinheit (180) umfasst, die so konfiguriert ist, dass sie die Verbindung von mindestens einer entfernten Vorrichtung ermöglicht, die mit der Vorrichtung (100) kompatibel ist, so dass die mindestens zwei Vorrichtungen im Spiegelbetrieb arbeiten und Interaktionen und oder Operationen, die auf einer Vorrichtung, lokal oder entfernt, identifiziert werden, in der oder den anderen verbundenen Vorrichtungen identifiziert werden und die verschiedenen Betriebsinformationen und Interessenindizien zusammengetragen werden.

## Claims

1. A method (200) wherein a plurality of information sources (115), assumed to be useful to the analysis of a situation having to be decided on, are referenced in a database (110) of a device (100), including a digital processing system (101) with display means (120) and interface means (140), said method comprising the following steps:
- the device visually presents, to at least one operator, at least one piece of information accessible from an information source (115) by displaying an information container stored in the database (110) in association with said information source;
- said at least one operator carries out, with the interface means (140), during a work session, interactions on information containers (111) presented to said at least one operator in a visual form by the display means (120);
- any interaction of said at least one operator with an information container (111), detected by the interface means (140), is memorised by the digital processing system (101);
- any modification of an information container, resulting from one of said interactions or from an independent action of the digital processing system (101), triggers the creation, by the digital processing system (101), of a state table (116) in a database of the states of the information containers (112), said state table including a set of variables defining a state of the display of said information container between a state start date and a state end date;
- said memorised interactions are interpreted to determine an index of interest of each of the information sources (115) at the origin of said information containers, the index of interest of said each information source (115) being established through a processing of the variables of the state tables (116), created during the work session, relating to the information containers of said considered each information source, by allocation of a weight assigned to each of the variables of the state table;
- on a query of an operator or of the digital processing system, the device (100) establishes a list of the information containers (111) of the database (110) organised by values, or value ranges, of the indices of interest determined for each of the information sources (115) during the work session.

2. The method according to claim 1, wherein the list of the information containers (111) of the database (110) organised by values, or value ranges, of the indices of interest determined for each of the information sources (115) determines a list of the information containers (111) of the database (110) whose index of interest is lower than a threshold value that is predefined and/or defined by an operator, said threshold value being selected as a criterion to define that the corresponding information sources (115) of the database (110) have not undergone any significant operation, that is to say any significant interaction of all of the information containers of the considered information source, during the work session.

3. The method according to one of the preceding claims, wherein a state table (116) includes a set of state variables of an information container, defining a state of said information container, said state variables including:
• an identifier of the container, and;
• an identifier of the associated information source, and;
• a state start date, and;
• an identifier of a display element on which the container is displayed, and/or;
• a position, in a reference frame associated to a display surface of the display means, of a reference point, advantageously a centre, of the information container, and/or;
• dimensions and orientation, in the reference frame associated to the display surface of the display means, of the information container, and/or;
• a status of the information container, and/or;
• a weight of the display of the information container in comparison with the display surface of the display means, determined as a ratio between the total display surface defined by the display mean(s) and the display surface occupied by the information container, and/or;
• a weight of the display surface of the information container visible to the operator(s) in comparison with the total display surface of said information container, and;
• an end date of this state.

4. The method according to claim 3, wherein a display surface of a display means consists of a set of a display unitary elements and wherein spatial weighting parameters recorded in a display weighting database (113), in which display weighting database each display unitary element of each of the display means is associated to a spatial weighting parameter of said display unitary element, correct the weights of the variables of the state table and of the index of interest assigned to an information source.

5. The method according to one of the preceding claims, wherein a list of the interactions carried out by an operator includes all or part of the operations of:
• pointing on an information container;
• selection of an information container;
• manipulation of the content of the information container;
• use relating to the information container of an interface element allowing validating that is content is taken into account;
• prolonged activity of one or several operator(s) above or around an information container;
• enrichment and or modification of the content of an information container by the interface means offered by the information container or any other software element.

6. The method according to one of the preceding claims considered in combination with claim 2, wherein an information container is displayed by the display means (120) for each of the information containers identified as not having been the object of any significant interaction and/or for each of the information sources identified as not having been the object of any significant operation.

7. The method according to one of the preceding claims, wherein each interaction carried out on an information container during the work session is memorised by the digital processing system (101) with dating of aid interaction and with an operation type identified as resulting from said interaction or from a sequence of interactions.

8. The method according to claim 6, wherein an operation type resulting from one interaction or from a sequence of interactions is identified in a nomenclature (150) stored in a memory of the digital processing system (101).

9. The method according to claim 7, wherein the nomenclature (150) identifies all or part of the operations of:
• creation and update of a database mapping the information sources and the associated information containers;
• selection of information containers from the database or accessible from other sources;
• display of the information of one or several information container(s), for example for presentation, consultation or comparison purposes;
• modification of a visual representation of the content of the information container;
• modification of the information of an information container;
• creation of a new information container from an existing information container;
• ranking of information containers;
• creation of attributes associated to an information source.

10. An assist device (100) configured to implement a method according to any of the preceding claims, said device including a digital processing system (101), a database (110) of information containers (111) and of information sources (115), display means (120) and interface means (140), to enable an operator to act on the operation of the device, functionally interconnected, said digital processing system including one or several processor(s), including data memories and program memories, and including means for connection to the database (110), to the display means (120) and to the interface means (140), said processors, memories and connection means being connected to one or several inner communication bus(es) (102) to exchange instructions and/or data, **characterised in that** the data processing system (101) is architecture and includes program instruction memories to functionally form:
• at least one administration unit (160) connected to the database (110) and in charge of the management of the information sources (115) and of the information containers (111) of said database and of the management of the relationships between said information sources and said information containers;
• at least one display management unit (162) connected to the display means (120) to display information containers (111) and the results of interactions of operators on said information containers;
• at least one interactions interpretation unit (161) connected to the interface means (140) to interpret the interactions carried out by operators with said interface means into actions on the information containers (111) and into operations on the information sources (115);
• at least one operation processing unit (163) organised so as to identify the information sources, from the database (110), having been the object of at least one operation and to identify the information sources, from said database, having not undergone any significant operation over a predefined period;
• at least one synthesis unit (164) generating information containers corresponding to the information sources having not undergone any significant operation over a predefined period and/or being associated to an index of interest lower than a threshold.

11. The device according to claim 10, including a database of the states of the information containers (112), which base including state tables (116), each state table containing variables defining a display of an information container over a determined time period.

12. The device according to claim 11, wherein a display surface of a display means consists of a set of display unitary elements and including a display weighting database (113), which base includes for each display unitary element of each of the display means a spatial weighting parameter of said display unitary element.

13. The device according to one of claims 10 to 12, wherein the operation processing unit (163) associates to each of the information sources (115) a number of operations performed on the information sources (115) over a predefined period.

14. The device according to one of claims 10 to 13, wherein the data processing system (101) includes at least one communication unit (180) configured to enable the connection of a computer (121) as a display terminal of the device (100) and/or as an interface means of the device (100).

15. The device according to one of claims 10 to 14, wherein the data processing system (101) includes at least one communication unit (180) configured to enable the connection of at least one remote device compliant with the device (100) so that the at least two devices operate in mirror mode and that the interactions and/or operations identified on one device, whether local or remote, are identified in the other connected device(s) and that the different operating information and the indices of interest are consolidated.
